(19) Europäisches Patentamt
European Patent Office
Office européen des brevets

(11) Publication number: **0 335 098 B1**

(12) # EUROPEAN PATENT SPECIFICATION

(45) Date of publication of patent specification: **17.05.95**

(51) Int. Cl.[6]: **B29C 43/52**, B29C 70/00, B29C 43/02

(21) Application number: **89102918.3**

(22) Date of filing: **20.02.89**

(54) **Compression molding of composite parts on hot mold surfaces with a short cycle time.**

(30) Priority: **30.03.88 US 176114**

(43) Date of publication of application:
**04.10.89 Bulletin 89/40**

(45) Publication of the grant of the patent:
**17.05.95 Bulletin 95/20**

(84) Designated Contracting States:
**DE FR GB IT NL**

(56) References cited:
**US-A- 4 304 751**

(73) Proprietor: **GENERAL ELECTRIC COMPANY**
**1 River Road**
**Schenectady**
**New York 12305 (US)**

(72) Inventor: **Kim, Bang Mo**
**1505 Wheatly Court**
**Schenectady**
**New York 12309 (US)**

(74) Representative: **Pratt, Richard Wilson**
**London Patent Operation**
**G.E. Technical Services Co. Inc.**
**Essex House**
**12/13 Essex Street**
**London WC2R 3AA (GB)**

**EP 0 335 098 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is related to a method for compression molding plastics.

Compression molding of glass reinforced thermoplastic sheets is a promising method for producing relatively thin, wide and strong parts such as car hoods, doors and panels. One important prerequisite for the use of glass reinforced composite products in automobile applications is a Class A surface. While there is no universally accepted specification, the Class A surface is a glossy, smooth and polished surface which should be as smooth as that of current automobile exterior parts made from sheet metal.

Current molding processes of glass reinforced thermoplastic composite sheets begins with the heating composite blanks in an oven, typically in infrared or hot air convection ovens. The material is heated above its melting point or if an amorphous material at least substantially above its glass transition temperature. The hot blanks are then pressed between cool mold surfaces (surfaces lower than the melting point or the glass transition temperatures), which are typically 79.4-121.1 °C (175°-250°F). A molding pressure of 6.9 to 27.6 MPa (one half ton/sq. in. to two tons/sq. in.) is applied to the mold during a typical cycle time of 45-60 seconds.

When the composite blanks are heated, they expand (loft) due to the recoil forces within the fibers. The surface of the expanded blanks then cools during its transfer to the mold, resulting in "frozen" resins on the surface. Compression of this blank in the cool mold produces surfaces which are not completely filled with resins, although some hot molten material moves from the inner core to the surface. This creates unfilled areas in the form of exposed fibers and surface porosity or voids. Since the resin at the cold surface is frozen and does not flow, rough boundaries between charged and newly formed areas are also produced. These exposed fibers, porous areas and blank boundaries are the major manifestations of surface roughness, although other physical processes, such as differential thermal shrinkage between fibers and resins, can also result in surface roughness and/or waviness.

Recently it has been found that smooth surfaces can be obtained from neat resin in blow molding by using hot surface molding. The resin is supplied hot to the mold as a parison in blow molding or injected into the mold in injection molding. These techniques, which are based on temperature cycling of mold surfaces, increase the cycle time of the process. The increased cycle time is the major disadvantage of these techniques. In addition, composite sheets with continuous mat fibers cannot easily be injected or supplied as a parison. Heating of composite sheets causes the fibers to loft and extend outside the polymer resin matrix. Attempts to obtain smooth surfaces with composite sheets have involved trying to change the structure of the composite sheets so that the outside layers on the composite sheets have neat resin with barrier layers sometimes being provided to prevent the fibers situated in the middle layers from coming to the surface. These sheets could then be molded using conventional compression molding techniques.

US-A-4 304 751 discloses a process for shaping thermoplastic articles formed in a rapid stamping operation which comprises:

- placing a thermoplastic composition on a rigid plate, the surface of the plate contacting the composition having a special finish, the plate being preshaped to fit the contour of one of the die;
- preheating both the composition and the plate to a temperature greater than the melting temperature of the composition;
- maintaining a set of dies at a temperature lower than the melting temperate composition;
- transferring the composition and the plate to the set of dies, the plate being placed on the die to which it has been contoured;
- pressing the composition and the plate between the set of dies until the plate has substantially cooled and until the composition maintains its integrity and will no longer warp; and
- removing the composition and the plate from the set of dies.

It is an object of the present invention to provide a method of compression molding reinforced thermoplastic composite sheets which result in finished products with smooth surfaces, a minimum of exposed fiber, porosity, and blank boundaries.

It is a further object of the present invention to provide a method of compression molding reinforced thermoplastic parts which results in short cycle times and therefore increased throughput for each press.

It is still a further object of the present invention to provide a method of compression molding reinforced thermoplastic composite sheets which reduces the required molding pressure and therefore reduces press size, which is particularly significant in large part fabrication.

It is another object of the present invention to provide a method of compression molding reinforced thermoplastic which results in reduced thermal decomposition of the thermoplastic resins.

It is yet another object of the present invention to provide a method of compression molding reinforced thermoplastic sheets which preserve the original sheet structure after molding.

Further details of the invention are defined in features of the dependent claims.

In one aspect of the present invention a method of compression molding reinforced thermoplastic composite sheets to obtain smooth surface finishes and short cycle times is provided. The method comprises the steps of:

- preheating the composite sheet in an oven to soften said composite sheet;
- placing the softened sheet between nondeformable mold inserts having a thickness of 1.5875 mm (1/16 inch) to 6.35 mm (1/4 inch) and having the desired contour of the part to be molded, so that said composite sheet conforms to the contour of the mold inserts;
- conduction heating the composite sheet and mold inserts above the temperature at which the thermoplastic material in the composite sheet becomes molten;
- transporting the composite sheet between the mold inserts to a mold cooled to a temperature lower than that at which the thermoplastic sheet solidifies;
- placing the mold inserts and composite sheet in the mold;
- closing the mold, the composite sheet and inserts having been heated sufficiently and the inserts having sufficient mass to allow the thermoplastic resin to flow and fill the mold inserts during mold closing;
- allowing the molded composite sheet to cool;
- opening the mold and removing the molded composite sheet and the mold inserts; and
- separating the molded composite sheet from the mold inserts.

The subject matter which is regarded as the invention is particularly pointed out and distinctly claimed in the concluding portion of the specification. The invention however, both as to organization and method of practice, together with further objects and advantages thereof, may be best understood by reference to the following description taken in conjunction with the accompanying figures in which:

Figure 1 is an isometric representation of the steps of compression molding reinforced thermoplastic composite sheets to obtain smooth surface finishes in accordance with the present invention;

Figure 2 is a graph of the transient temperature profile of heated 3.175 mm (1/8") mold inserts surrounding a heated composite blank in a compression mold immediately after mold closing;

Figure 3 is a graph showing a comparison of the calculated surface temperature decay of a composite material containing a crystalline polymer after mold closing, when molded in a cool mold press and when molded cold mold press with heated inserts;

Figure 4 is a graph showing a comparison of the calculated temperature decay comparison at the centerline of a composite material containing an amorphous polymer after mold closing, when molded in a cool mold press and when molded in a cold mold press with heated inserts;

Figure 5 is a graph of the required mold pressure per square inch for different amounts of blank elongation for a cool mold and a cold mold using heated inserts; and

Referring now to the drawings and and particularly Figure 1 thereof. A composite sheet 11 comprising thermoplastic resin, including reinforcing layers, is shown being preheated to approximately the glass transition temperature of the resin in an oven 13. Oven 13 can comprise a convection oven as shown or an infrared oven. Preheating allows the sheet 11 to soften to conform to the contours of mold inserts 15 and 17 when it is placed between the two thin mold inserts. The composite sheet can comprise, for example, approximately 30-40% glass fiber mat and 70-60% polymer resin. The glass fiber mats can be fabricated from continuous strands sized with a sizing compatible with a matrix resin being used. Depending on the application, a variety of polymer matrices such as polycarbonate, polyesters, polypropylene, polyamide polyimides, polyphenylene oxide, polystyrene and blends of the above can be used. The mold inserts 15 and 17 with the sheet 11 in between are then further heated above the temperature at which the matrix material in the composite sheet becomes molten, preferably by conduction heating between plates 21 and 23 containing heating elements 25. The temperature of the sheet will exceed the glass transition temperature if an amorphous resin is being used or exceed the melting point if a crystalline resin is being used. The mold inserts 15 and 17 can be fabricated from a material which can withstand the compression forces at elevated temperatures at which the composite material melts without distorting and has a smooth surface for shaping the composite materials. Examples of such materials are metals, ceramics, high temperature plastics, plastic composites. Conduction heating of the mold inserts is preferred over convection or infrared heating because of the faster heat transfer. The inserts with the sheet in between are transported then to a press 22 and between the cold upper and lower mold halves of a cold press 27 and compressed. The mold halves can comprise tool steel or to reduce cost can comprise a softer less expensive material such as aluminum on plastic composites. Since the mold inserts are used in direct contact with the composite, the mold halves are not subjected to wear by the material to be molded. The mold halves with which the hot inserts come in contact are maintained at approximately 37.8 °C (100 °F) by liquid cooling through passageways (not shown) in the mold halves, not shown. Initially, the resins in contact with the hot mold inserts remain molten and fill the insert mold surface under pressure. The composite part and mold inserts cool in the cooled mold halves. The composite product is released from the mold inserts and the mold inserts reused. If only one smooth surface is required, one mold insert may be sufficient. The optimum thickness of the mold insert is determined by the minimum mass required to provide hot surfaces, the cooling time desired and the mechanical strength needed to withstand the compression molding process.

The surfaces of composite parts distributed fibers throughout the sheet produced by hot surface molding of composite sheets were analyzed using a mechanical profilometer (Feinpruef Model M4P). Table 1 shows the comparison of the average roughness and the peak-to-valley height of composite parts produced by hot surface molding and cold surface molding. Samples made by hot surface molding with fine fibers and coarse fibers had average roughness of 0.213 µm (8.4) and 0.238 µm (9.4 microinches) and peak to valley height of 65 and 78 microinches. Compared to values of 0.762 µm (30) and 1.206 µm (47.5 microinches) for average roughness and 10.16 µm (400) and 11.43 µm (450 microinches) for peak-valley height on parts made by the cold surface molding, it is a significant improvement in surface roughness. The significant reduction in surface roughness is due to elimination of imperfections such as exposed fibers, porosity and voids at the surfaces.

The shape of the contact area between the mold inserts and the cold mold halves is important because of the thermal shrinkage that occurs to the mold inserts when cooling. Since the shape of the portion of the mold insert contacting the mold halves does not have to conform exactly to the mold insert contours, a simple geometry which provides good contact between the cold mold halves and surface element can be used.

TABLE 1

| Comparison of Surface Roughness | | |
|---|---|---|
| Hot Surface Molding | Average Roughness µm (micro. in.) | Average Peak Valley Height µm (micro in.) |
| fine fiber composite | 0.213 (8.4) | 1.651 (65) |
| coarse fiber composite | 0.238 (9.4) | 1.981 (78) |
| Cold Surface Molding | | |
| fine fiber composite | 0.762 (30) | 10.16 (400) |
| coarse fiber composite | 1.206 (47.5) | 11.43 (450) |

A one dimensional transient heat transfer mathematical analysis was made on a multilayer system comprising five layers; mold/insert/composite/insert/mold. The heat transfer between the insert and the composite was assumed to take place by conduction. The temperature profile of a 3.175 mm (1/8") composite sheet situated between two 3.175 mm (1/8") metal mold inserts in contact with a cooled mold is shown in Figure 3. Dimensionless temperature was used in the calculations with dimensionless temperature defined by the ratio $((T-T_c)/(T_i-T_c)$, where T, $T_i$ and $T_c$ stand for temperature as a function of time and location, initial temperature, and boundary temperature, respectively. A constant boundary condition was used where the mold inserts were assumed to be heated to 287.8°C (550°F) ($T_i$) and cooling fluid in the cooled mold, with which the mold inserts where in contact, provided a constant temperature of 37.8°C (100°F) ($T_c$) at a distance of 6.35 mm (1/4 inch) from the mold insert surface.

Thermal conductivities of composite sheets were measured for use in the calculations and the thermal conductivities of composites made with continuous fiber mats are much higher than both the neat resin and short fiber filled composites. The composites were assumed to have a 40% fiber mat content.

If the resin used as a matrix in the composite material is polybutylene terephthalate available from a General Electric Co. as Valox® thermoplastic with a melting point of 232.2°C (450°F), its dimensionless temperature is 0.8. Referring to the Fig. 2 the melting temperature is maintained at the mold insert surface for 0.6 seconds. The temperature of the resin further away from the metal surface is maintained above the melting point longer than 0.6 seconds. If a high speed press fills the mold surface with resin during this time period, the surface will be free of voids. Using a maximum temperature of 121°C (250°F) as the desired final sheet temperature during cooling before release from the mold, cooling can be accomplished within 20 seconds. If the resin in the composite material is bisphenol A based polycarbonate an amorphous material with a glass transition temperature of 140°C (284°F), available from the General Electric Company as Lexan® 141 thermoplastic, the glass transition temperature is equivalent to 0.4 on the dimensionless temperature scale. A high speed press could fill the mold surface with resin during the period of time that the metal surface is maintained above the glass transition temperature and the surface will be free of voids. If a maximum temperature of 121.1 °C (250 °F) is again used as the desired final temperature during cooling before release from the mold, cooling can then be accomplished within 20 seconds. This indicates that the use of a hot mold insert fabricated from 3.175 mm (1/8 inch) metal sheets makes it possible to mold composite sheets free of voids.

A comparison of the calculated temperature decay of the surface of a composite sheet including a crystalline polymer in both a cold mold press with hot inserts and a cool surface press without inserts is shown in Figure 3. The temperature used in the calculations are 287.8 °C (550 °F) for the preheat temperature of the composite sheet and mold inserts, 107.2 °C (225 °F) for the mold surface temperature in the cool surface molding, and 37.8 °C (100 °F) for the mold temperature of the cold mold into which the mold inserts are placed. Initially, the temperature of the metal surface in contact with the composite sheet during hot surface molding with hot mold inserts is much higher than during cool surface molding allowing increased flow time of the polymer resin assuming a smooth surface without voids.

Referring now to Figure 4 a comparison of the calculated temperature decay of the centerline of a composite sheet including a crystalline polymer in both a cold mold press with hot inserts and a cool surface press without inserts is shown. The temperatures use in the calculations are the same as used in connection with Figure 4, 287.8 °C (550 °F) for the preheat temperature of the composite sheet and mold inserts, 107.3 °C (225 °F) for the mold surface temperature in the cool surface molding and 37.8 °C (100 °F) for the mold temperature of the cold mold into which the mold inserts are placed. Initially, the temperature of the centerline of the composite material in the hot inserts and in the cool mold are the same. As cooling continues, the temperature in the middle of the composite in the hot surface molding process cools more rapidly than in the cool surface mold, showing that it is possible to have a shorter cycle time with the hot mold insert than with conventional cool surface molding.

The use of a thicker insert, 6.35 mm (1/4 inch) for example, does not result in much of an increase in cooling time (17-20 seconds in this case) when a mold insert fabricated of high thermoconductivity material such as metal is used. Increasing the composite thickness to 6.35 mm (1/4 inch) however, increases the cooling time to almost a minute, while the time the composite surface temperature remains higher than its melting temperature stays the same.

The temperature selected for the cooled mold can be in the range of 10 °C (50 °) to 149 °C (300 ° F). The lower the temperature the quicker the cycle time. However, for smooth surfaces the resin must be molten during press closing limiting the temperature selected. The cool mold temperatures in the upper part of the range are used with resins having high glass transition temperatures while the temperatures in the lower portion of the range are used with resins having low glass transition temperatures.

Referring now to Figure 5, the reduced pressure requirement in compression molding for hot surface mold inserts in a cold mold and a conventional cool mold is shown. For all the ratios of area of a part after compression molding to area of a part before compression molding, it is seen that the compression molding can be accomplished at reduced pressure when the hot surface insert mold technique is used. The reduced pressure requirement results from the higher composite sheet temperature in the early molding stages and resulting slow initial cooling at the composite surface.

The use of the mold insert to transport the heated sheet blank from the oven to the press is another important feature of this invention. Since the heated sheet blank is very flexible, a carrier which supports it, is required, particularly when transporting a large blank. The insert can be used as a carrier for this purpose.

Mold inserts in contact with the composite blank reduce surface cooling of the blank during its transfer from the oven to mold. While composites can be heated to a higher initial temperature to compensate for cooling which occurs when mold inserts are not used, thermal decomposition of the resin in the composite sheet will increase due to the longer heating times, higher temperatures, and increased exposure to air. The use of mold inserts allows plastics with a narrow operating ranges to be more easily accommodated.

The foregoing has described a method of compression molding reinforced thermoplastic composite sheets which result in finished products with smooth surfaces and a minimum of exposed fiber, porosity and blank boundaries. Parts can be formed using the present invention that require short cycle times and reduced molding pressure.

## Claims

1. A method of compression molding a reinforced thermoplastic resin composite sheet (11) to obtain a part with a desired surface finish in a short cycle time, comprising the steps of:
   - preheating the composite sheet (11) in an oven (13) to soften said composite sheet;
   - placing the softened composite sheet (11) between nondeformable mold inserts (15,17) having a thickness of 1.5875 mm (1/16 inch) to 6.35 mm (1/4 inch) and having the desired contour of the part to be molded, so that said composite sheet conforms to the contour of said inserts;
   - conduction heating the composite sheet (11) and mold inserts (15,17) above the temperature at which the thermoplastic material in the composite sheet becomes molten;
   - transporting the composite sheet between the mold inserts to a mold (22) cooled to a temperature lower than that at which the thermoplastic sheet solidifies;
   - placing the mold inserts (15,17) and composite sheet (11) in the mold (22);
   - closing the mold (22), the composite sheet (11) and inserts (15,17) having been heated sufficiently and the inserts having sufficient mass to allow the thermoplastic resin to flow and fill the mold inserts during mold closing;
   - allowing the molded composite sheet (11) to cool;
   - opening the mold (22) and removing the molded composite sheet (11) and the mold inserts (15,17); and
   - separating the molded composite sheet (11) from the mold inserts (15,17).

2. The method of claim 1, wherein said composite sheet (11) comprises approximately 30-40% continuous fiber mat in a thermoplastic resin matrix.

3. The method of claim 2, wherein the cooled press (22) is maintained in the range of 10 (50) to 149 °C (300 °F).

4. The method of claim 3, wherein the mold insert (15,17) is fabricated from a metal, ceramic or plastic composite.

5. The method of anyone of claims 1 to 4, further comprising the steps of reusing the mold inserts (15,17) for compression molding reinforced thermoplastic composite sheets.

## Patentansprüche

1. Verfahren zum Formpressen einer verstärkten thermoplastischen Harzverbundplatte (11) zur Erzielung eines Teiles mit einer gewünschten Oberflächenbeschaffenheit in einer kurzen Zykluszeit, umfassend die folgenden Stufen:
   - Vorerhitzen der Verbundplatte (11) in einem Ofen (13) zur Erweichung der Verbundplatte;
   - Anordnen der erweichten Verbundplatte (11) zwischen nichtverformbaren Formeinsätzen(15,17) mit einer Dicke von 1,5875 mm (1/16 Inch) bis 6,35 mm (1/4 Inch), welche die gewünschte Kontur des zu formenden Teiles aufweisen, so daß die besagte Verbundplatte der Kontur der besagten Einsätze entspricht;
   - wärmeleitende Erhitzung der Verbundplatte (11) und der Formeinsätze (15,17) über die Temperatur, bei der das thermoplastische Material in der Verbundplatte zu schmelzen beginnt;
   - Transportieren der Verbundplatte zwischen den Formeinsätzen in eine Form (22), die auf eine Temperatur abgekühlt wird, welche geringer ist als diejenige, bei der die thermoplastische Verbundplatte sich verfestigt;
   - Anordnen der Formeneinsätze (15,17) und der Verbundplatte (11) in der Form (22);
   - Schließen der Form (22), nachdem die Verbundplatte (11) und die Einsätze (15,17) genügend erhitzt waren und die Einsätze eine ausreichende Masse aufweisen, um das thermoplastische Harz fließen zu lassen und die Formeneinsätze während des Schließens der Form zu füllen;
   - Abkühlen lassen der ausgeformten Verbundplatte (11);
   - Öffnen der Form (22) und Entfernen der ausgeformten Verbundplatte (11) und der Formeneinsätze (15,17); und
   - Abtrennen der ausgeformten Verbundplatte (11) von den Formeneinsätzen (15,17).

2. Verfahren nach Anspruch 1, worin die besagte Verbundplatte (11) ungefähr 30 - 40 % durchgehende Fasermatten in einer thermoplastischen Harzmatrix aufweist.

3. Verfahren nach Anspruch 2, bei dem die gekühlte Presse (22) auf einem Temperaturbereich von 10 (50) bis 149 °C (300 °F) gehalten wird.

4. Verfahren nach Anspruch 3, bei dem der Formeneinsatz (15,17) aus einer Metall-,Keramik-oder Kunststoff-Verbundplatte gefertigt ist.

5. Verfahren nach einem der Ansprüche 1 bis 4, gekennzeichnet durch die Stufe der Wiederverwendung der Formeneinsätze (15,17) für das Formpressen harzverstärkter thermoplastischer Verbundplatten.

**Revendications**

1. Procédé de moulage par compression d'une feuille composite (11) de résine thermoplastique renforcée pour obtenir une pièce avec un fini de surface souhaité en un temps de cycle court, comprenant les étapes consistant à :
   - préchauffer la feuille composite (11) dans un four (13) pour ramollir ladite feuille composite,
   - placer la feuille composite ramollie (11) entre des inserts de moule non déformables (15, 17), ayant une épaisseur comprise entre 1,5875 mm (1/16 pouce) et 6,35 mm (1/4 pouce) et ayant le contour souhaité pour la pièce qui doit être moulée, de telle sorte que ladite feuille composite épouse le contour desdits inserts,
   - chauffer par conduction la feuille composite (11) et les inserts de moule (15, 17) au-dessus de la température à laquelle le matériau thermoplastique contenu dans la feuille composite fond,
   - transporter la feuille composite entre les inserts de moule jusque dans un moule (22) refroidi à une température plus basse que celle à laquelle la feuille thermoplastique se solidifie,
   - placer les inserts de moule (15, 17) et la feuille composite (11) dans le moule (22),
   - fermer le moule (22), la feuille composite (11) et les inserts de moule (15, 17) ayant été chauffés suffisamment et les inserts ayant une masse suffisante pour permettre à la résine thermoplastique de s'écouler et de remplir les inserts de moule pendant la fermeture du moule,
   - laisser refroidir la feuille composite moulée (11),
   - ouvrir le moule (22) et retirer la feuille composite moulée (11) ainsi que les inserts de moule (15, 17), et
   - séparer la feuille composite moulée (11) des inserts de moule (15, 17).

2. Procédé selon la revendication 1, dans lequel ladite feuille composite (11) contient approximativement de 30 à 40% d'un mat de fibres continues dans une matrice de résine thermoplastique.

3. Procédé selon la revendication 2, dans lequel le moule refroidi (22) est maintenu dans la fourchette de 10 à 149 °C (entre 50 et 300 °F).

4. Procédé selon la revendication 3, dans lequel l'insert de moule (15, 17) est fait d'un métal, d'une céramique ou d'une matière plastique composite.

5. Procédé selon l'une quelconque des revendications 1 à 4, qui comprend en outre les étapes consistant à ré-utiliser les inserts de moule (15, 17) pour le moulage par compression de feuilles composites en thermoplastique renforcé.

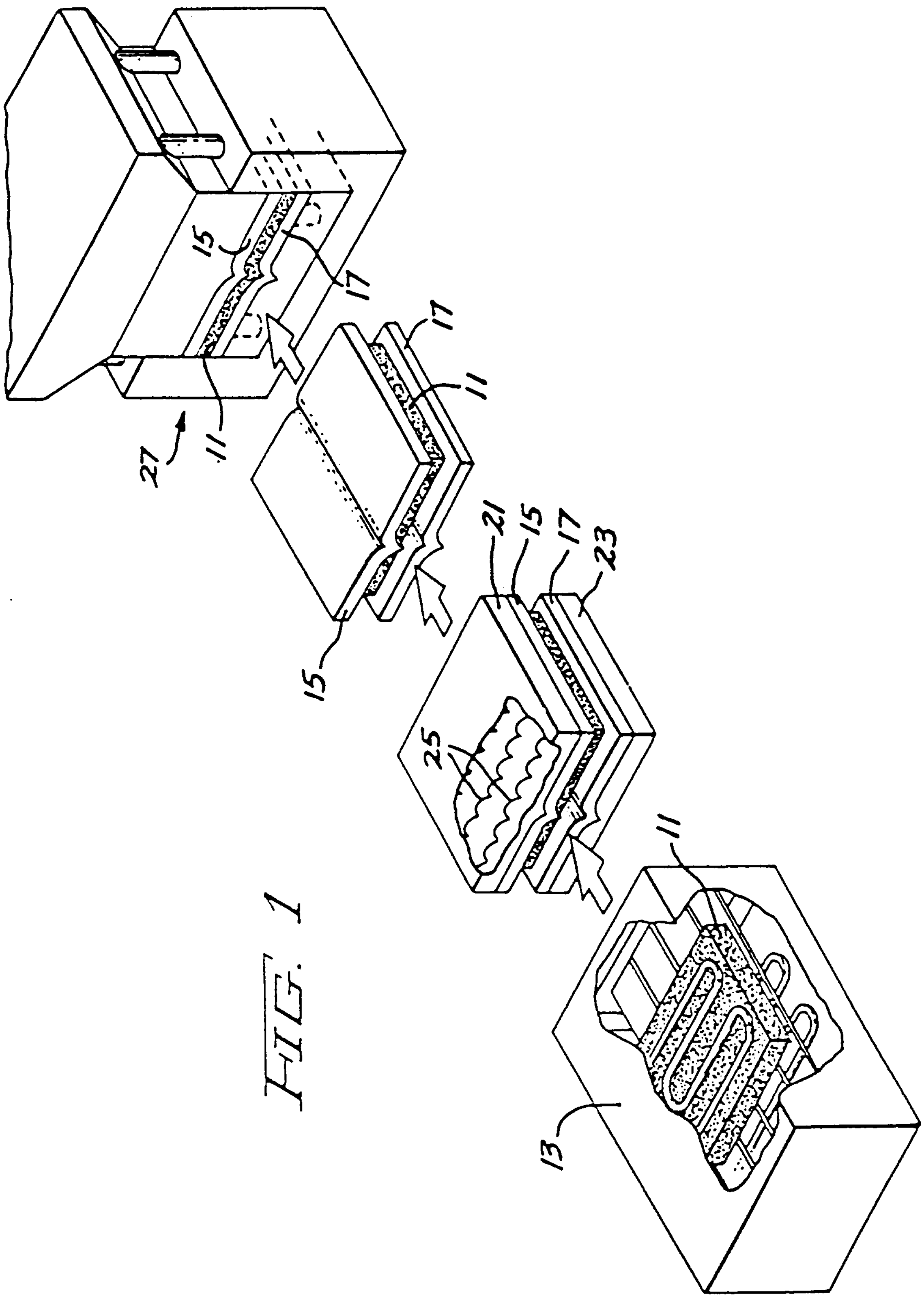


FIG. 1

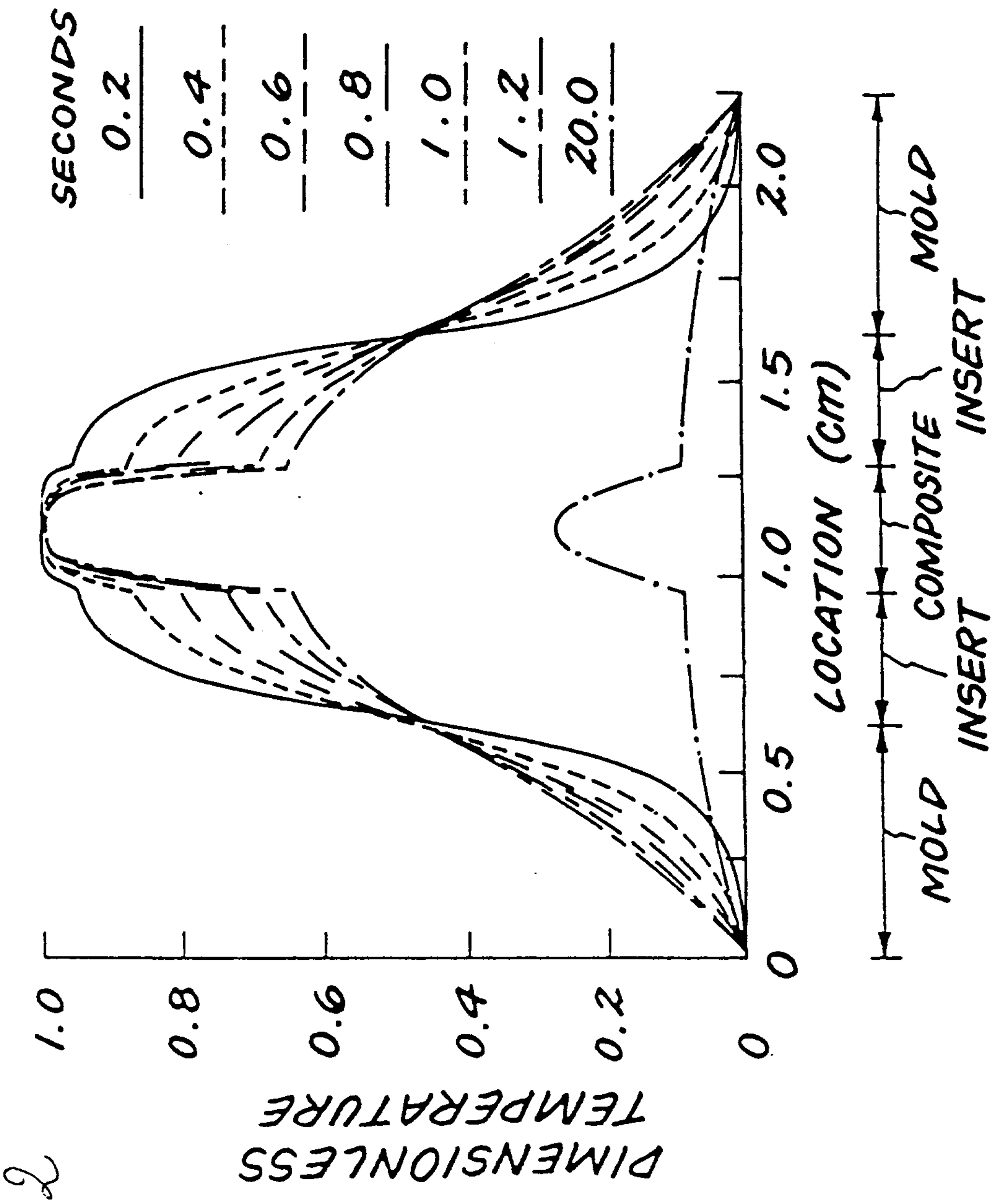
SECONDS
0.2
0.4
0.6
0.8
1.0
1.2
20.0
DIMENSIONLESS TEMPERATURE
1.0
0.8
0.6
0.4
0.2
0
0
0.5
1.0
1.5
2.0
LOCATION (cm)
MOLD
INSERT
COMPOSITE
INSERT
MOLD

FIG. 2

FIG. 3

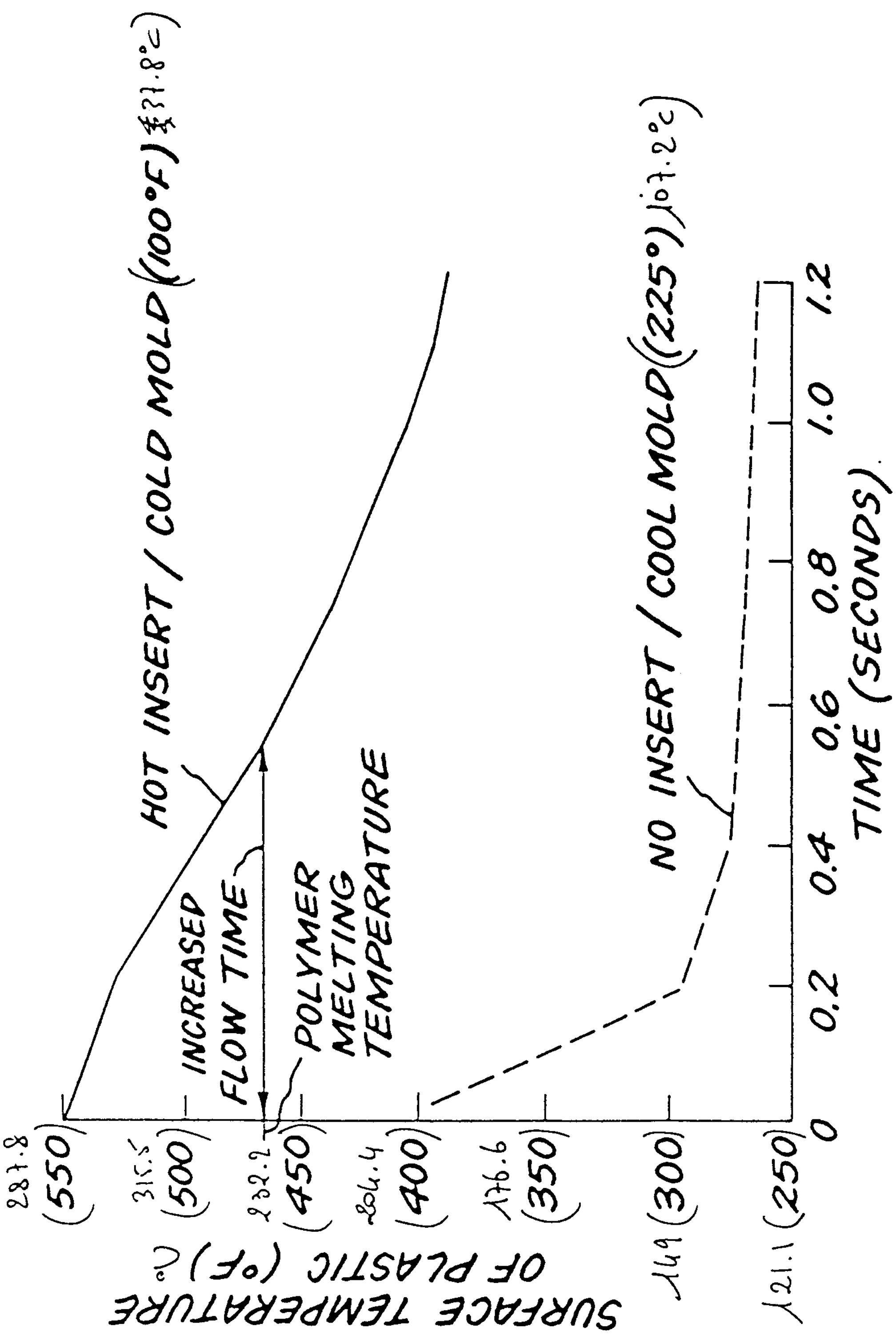
HOT INSERT / COLD MOLD (100°F) 37.8°C
NO INSERT / COOL MOLD (225°) 107.2°C
INCREASED FLOW TIME
POLYMER MELTING TEMPERATURE
SURFACE TEMPERATURE OF PLASTIC (°F) °C
287.8 (550)
315.5 (500)
232.2 (450)
204.4 (400)
176.6 (350)
149 (300)
121.1 (250)
0
0.2
0.4
0.6
0.8
1.0
1.2
TIME (SECONDS)

FIG. 4

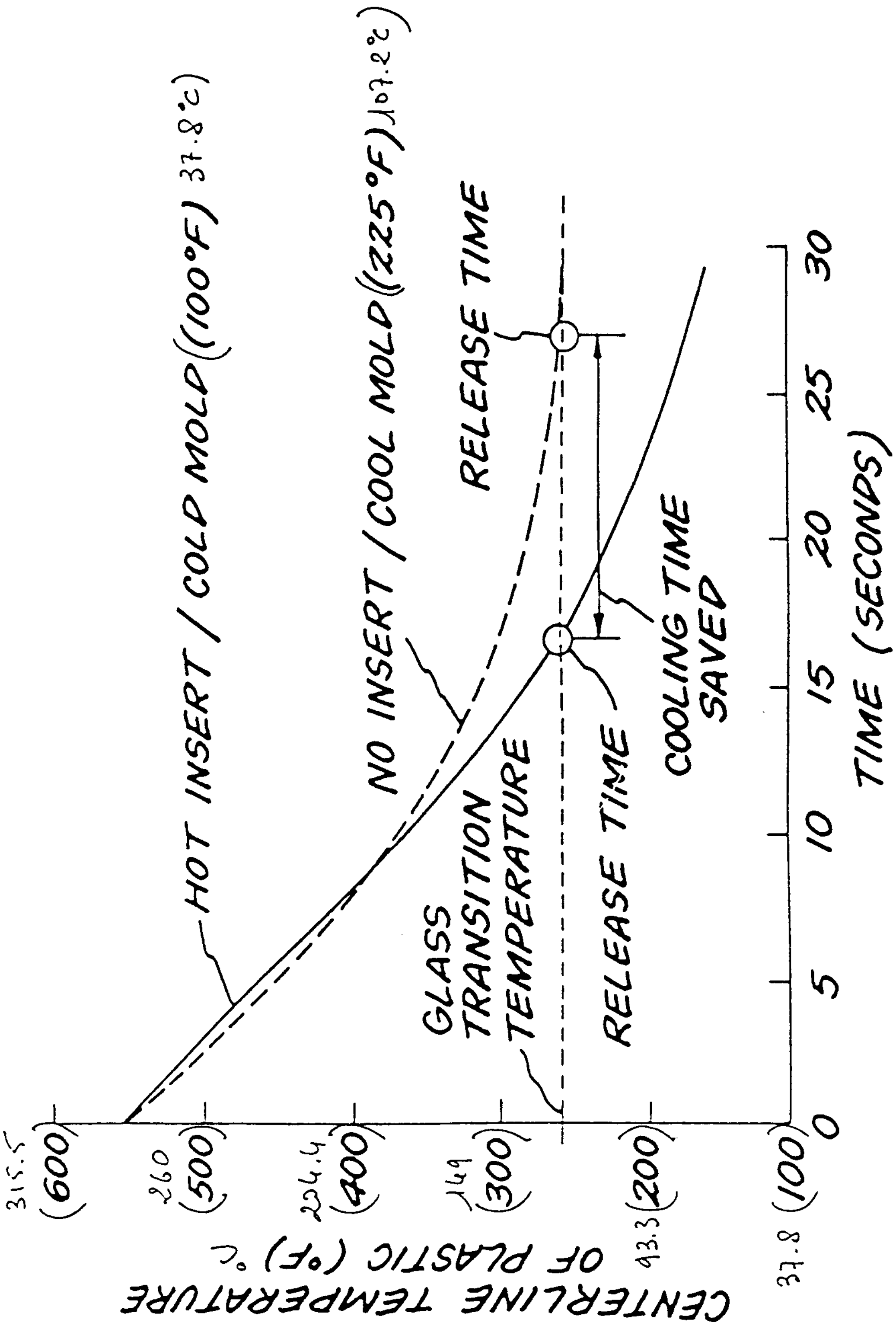
HOT INSERT / COLD MOLD ((100°F) 37.8°C)
NO INSERT / COOL MOLD ((225°F) 107.2°C)
RELEASE TIME
GLASS TRANSITION TEMPERATURE
RELEASE TIME
COOLING TIME SAVED
TIME (SECONDS)
0
5
10
15
20
25
30
CENTERLINE TEMPERATURE OF PLASTIC (°F) °C
315.5 (600)
260 (500)
204.4 (400)
149 (300)
93.3 (200)
37.8 (100)

FIG. 5

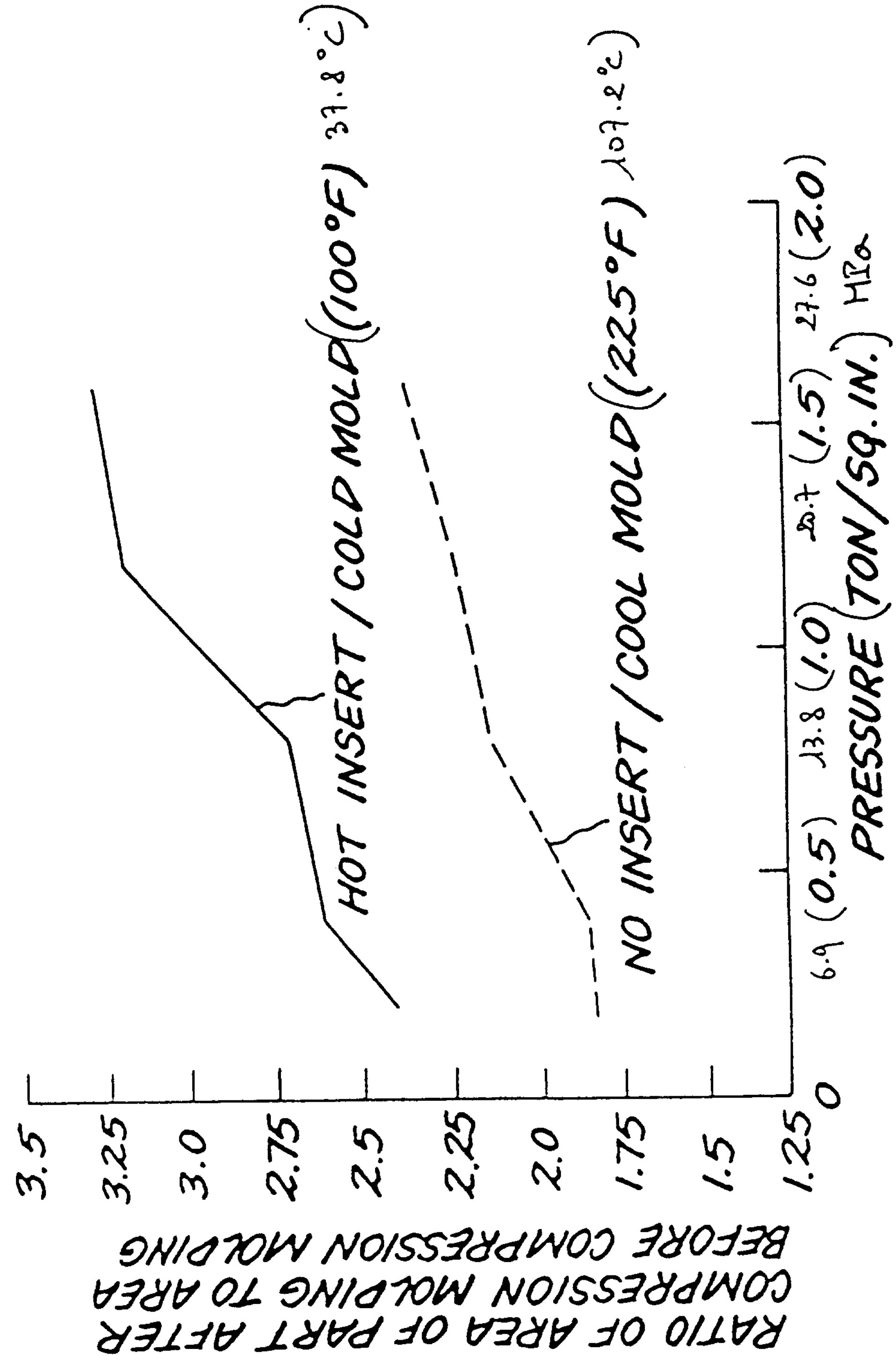
HOT INSERT / COLD MOLD ((100°F) 37.8°C)
NO INSERT / COOL MOLD ((225°F) 107.2°C)
PRESSURE (TON/SQ.IN.) MPa
0
6.9 (0.5)
13.8 (1.0)
20.7 (1.5)
27.6 (2.0)
RATIO OF AREA OF PART AFTER COMPRESSION MOLDING TO AREA BEFORE COMPRESSION MOLDING
1.25
1.5
1.75
2.0
2.25
2.5
2.75
3.0
3.25
3.5